# EUROPEAN PATENT APPLICATION

(11) **EP 2 123 997 A1**
(43) Date of publication of application: **25.11.2009**
(21) Application number: 08704483.0
(22) Date of filing: 06.02.2008
(51) Int. Cl.: F25B 15/14

(54) **ABSORPTION-TYPE FREEZING UNIT**

(30) Priority: 16.02.2007 JP 2007036378; 15.11.2007 JP 2007296448
(71) Applicant: Hachiyo Engineering Co., Ltd., Yaizu-shi Shizuoka 425-0021 (JP)
(72) Inventor: KANEO, Hidetoshi, Yaizu-shi Shizuoka 425-0028 (JP)
(74) Representative: Hughes, Andrea Michelle
(86) International application number: PCT/JP2008/051912
(87) International publication number: WO 2008/099726

(57) **Abstract**

The present invention is directed to developing a new absorption refrigerating apparatus that can be miniaturized and can be mounted on a mover such as an automobile or the like. The absorption refrigerating apparatus is **characterized in that** a semi-permeable membrane is interposed between a refrigerant positioned in an evaporator and an aqueous solution of a moisture absorbent positioned in an absorber and/or between an aqueous solution of a moisture absorbent positioned in a regenerator and a refrigerant positioned in a condenser. Even when the apparatus is vibrated, the movement of steam from the evaporator to the absorber and the movement of steam from the regenerator to the condenser are not blocked while avoiding the refrigerant positioned in the evaporator and the aqueous solution of the moisture absorbent positioned in the absorber being mixed with each other and avoiding the dehydrated aqueous solution of the moisture absorbent positioned in the regenerator and water positioned in the condenser being mixed with each other. Therefore, the apparatus can be mounted on the mover such as the automobile or the like.

## Description

### TECHNICAL FIELD

The present invention relates to an absorption refrigerating apparatus and, in particular, to an apparatus that can be miniaturized and can be also mounted on a mover such as an automobile or the like.

### BACKGROUND ART

In recent years, chlorofluorocarbon used as a refrigerant of an apparatus such as an air conditioner or a refrigerating machine has been replaced with a natural medium such as ammonia, carbon dioxide, carbon hydride, water or the like in view of problems of ozone layer depletion, global warming, and the like.
Particularly an apparatus using water as a refrigerant has advantages that the water is low in cost, the water hardly affects the human body and the environment even if it leaks out, the water is easily processed when disposed, latent heat of evaporation of the water is large, and the viscosity of the water is relatively low. On the other hand, the apparatus has disadvantages that it is forced to be significantly large in size per unit capability when designed as a practical machine, because the specific volume of steam in an operating temperature zone is great, resulting in an increase in manufacturing cost and limiting installation places.

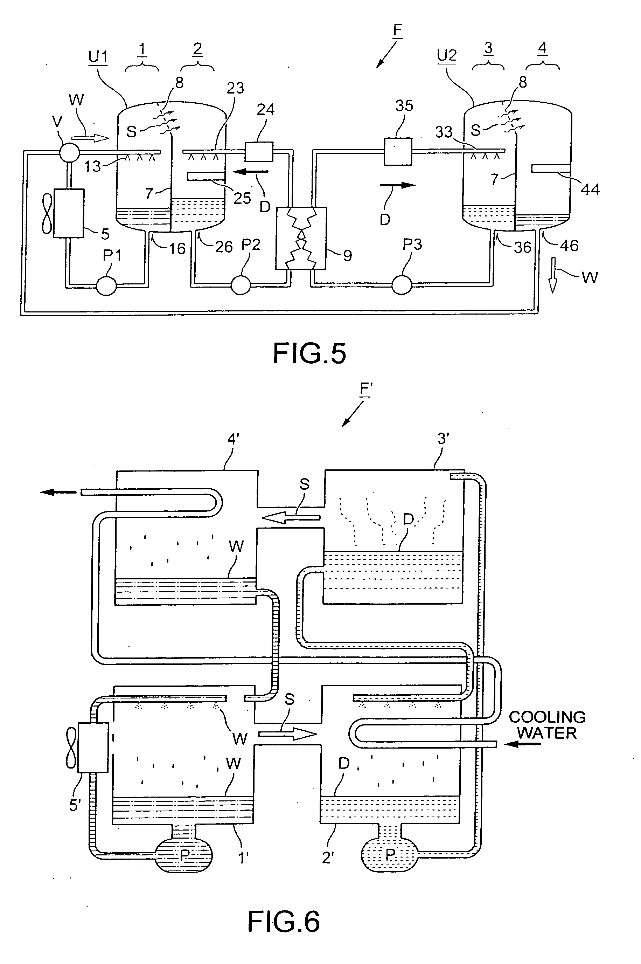

An example of the above-mentioned apparatus using water as a refrigerant is an absorption refrigerating apparatus F'. The apparatus includes an evaporator 1', an absorber 2', a regenerator 3', and a condenser 4', as illustrated in Fig. 6, as an example. The evaporator 1' evaporates water W to take heat of evaporation out of the water W and provide the water W as a refrigerant.
Steam S produced at this time is absorbed in an aqueous solution of a moisture absorbent D in the absorber 2' to promote the evaporation of the water W in the evaporator 1'. On the other hand, the regenerator 3' dehydrates the aqueous solution of the moisture absorbent D, and feeds the dehydrated aqueous solution of the moisture absorbent D to the absorber 2' again to cyclically use the aqueous solution of the moisture absorbent D. Furthermore, the condenser 4' condenses the water (steam S) removed from the aqueous solution of the moisture absorbent D into water W, and feeds the water W to the evaporator 1' again to cyclically use the water W.
When the absorption refrigerating apparatus F' is vibrated, the water W positioned in the evaporator 1' and the aqueous solution of the moisture absorbent D positioned in the absorber 2' may be mixed with each other and the dehydrated aqueous solution of the moisture absorbent D positioned in the regenerator 3' and the water W positioned in the condenser 4' may be mixed with each other because of its configuration. Therefore, due to the above reason, combined with the difficulty in miniaturizing the whole apparatus, the mounting of the apparatus on a mover such as an automobile or the like has not been realized (see Patent document 1, for example).
Patent document 1: Japanese Patent Application Laid-Open Publication No. 2003-21418

### DISCLOSURE OF THE INVENTION

### PROBLEMS TO BE SOLVED BY THE INVENTION

In view of such a background, the present invention is directed to developing a new absorption refrigerating apparatus that can be miniaturized and can be mounted on a mover such as an automobile or the like.

### MEANS FOR SOLVING THE PROBLEMS

An absorption refrigerating apparatus as set forth in claim 1 includes an evaporation and absorption unit including an evaporator and an absorber installed adjacent to the evaporator, and a regeneration and condensation unit including a regenerator and a condenser installed adjacent to the regenerator, wherein the evaporator evaporates water in a refrigerant to take heat of evaporation out of the refrigerant, to decrease the temperature of the refrigerant and provide the refrigerant for cooling, steam produced at this time is absorbed in an aqueous solution of a moisture absorbent in the absorber to promote the evaporation of the water from the refrigerant, the regenerator removes the water absorbed in the aqueous solution of the moisture absorbent and feeds the aqueous solution of the moisture absorbent to the absorber again to cyclically use the aqueous solution of the moisture absorbent, and the condenser recovers the water removed from the aqueous solution of the moisture absorbent and feeds the water to the evaporator again to cyclically use the water, and the absorption refrigerating apparatus is **characterized in that** a semi-permeable membrane is interposed between the refrigerant positioned in the evaporator and the aqueous solution of the moisture absorbent positioned in the absorber and/or between the aqueous solution of the moisture absorbent positioned in the regenerator and the refrigerant positioned in the condenser.
According to the present invention, even when the apparatus is vibrated, the movement of the steam from the evaporator to the absorber and the movement of the steam from the regenerator to the condenser are not blocked while avoiding the refrigerant positioned in the evaporator and the aqueous solution of the moisture absorbent positioned in the absorber being mixed with each other and avoiding the dehydrated aqueous solution of the moisture absorbent positioned in the regenerator and the water positioned in the condenser being mixed with each other. This enables the apparatus to be mounted on a mover such as an automobile or the like.

In addition to the foregoing features, the absorption refrigerating apparatus as set forth in claim 2 is **characterized in that** the evaporator and the absorber are provided in the same housing.
According to this embodiment of the invention, the total volume of the evaporator and the absorber can be reduced without reducing their respective capacities, so that the apparatus can be miniaturized.

In addition to the foregoing features, the absorption refrigerating apparatus as set forth in claim 3 is **characterized in that** the regenerator and the condenser are provided in the same housing.
According to this embodiment of the invention, the total volume of the regenerator and the condenser can be reduced without reducing their respective capacities, so that the apparatus can be miniaturized.

In addition to the foregoing features, the absorption refrigerating apparatus as set forth in claim 4 is **characterized in that** a demister is interposed between the evaporator and the absorber or between the regenerator and the condenser.
According to this embodiment of the invention, the refrigerant or the aqueous solution of the moisture absorbent can be prevented from coming into direct contact with semi-permeable membranes of adjacent devices and a semi-permeable membrane disposed in the boundary between the devices when the apparatus is vibrated, to thereby avoid preventing the penetration of the steam and loosing heat.

In addition to the foregoing features, the absorption refrigerating apparatus as set forth in claim 5 is **characterized in that** the semi-permeable membrane is tubular, and is filled with the refrigerant or the aqueous solution of the moisture absorbent.
According to this embodiment of the invention, the steam can be exhaled through the tubular semi-permeable membrane in the evaporator, the steam can be accepted in the aqueous solution of the moisture absorbent through the tubular semi-permeable membrane in the absorber, the water can be exhaled from the aqueous solution of the moisture absorbent through the tubular semi-permeable membrane in the regenerator, and the steam can be further accepted and condensed through the tubular semi-permeable membrane in the condenser.

In addition to the features as set forth in claim 1, 2, 3 or 4, the absorption refrigerating apparatus as set forth in claim 6 is **characterized in that** the semi-permeable membrane is a membrane provided to separate the evaporator and the absorber or the regenerator and the condenser.
According to this embodiment of the invention, the steam can be exhaled through the filmy semi-permeable membrane in the evaporator, the steam can be accepted in the aqueous solution of the moisture absorbent through the filmy semi-permeable membrane in the absorber, the water can be exhaled from the aqueous solution of the moisture absorbent through the filmy semi-permeable membrane in the regenerator, and the steam can be further accepted and condensed through the filmy semi-permeable membrane in the condenser.

In addition to the foregoing features as set forth in claim 1, 2, 3, 4, or 6, the absorption refrigerating apparatus as set forth in claim 7 is **characterized in that** a capillary tube assembly is provided on a surface of the refrigerant in the evaporator.
According to this embodiment of the invention, the evaporation of the refrigerant can be promoted. Furthermore, the refrigerant or the aqueous solution of the moisture absorbent can be prevented from coming into direct contact with semi-permeable membranes of adjacent devices and a semi-permeable membrane disposed in the boundary between the devices when the apparatus is vibrated, to thereby avoid preventing the penetration of the steam.

In addition to the foregoing features, the absorption refrigerating apparatus as set forth in claim 8 is **characterized in that** the refrigerant is an aqueous solution of a moisture absorbent that is weaker in moisture absorption power than the aqueous solutions of the moisture absorbents positioned in the absorber and the regenerator.
According to this embodiment of the invention, the condenser can smoothly recover the steam produced in the regenerator.
The above-mentioned problems are solved using features of the inventions as set forth in the claims as means.

### EFFECTS OF THE INVENTION

According to the present invention, the absorption refrigerating apparatus can be mounted on an automobile or the like because it can be miniaturized while the resistance against vibration thereof can be improved.
Furthermore, exhaust heat of an engine can be used as an energy for car air-conditioning. Therefore, the energy can be effectively made use of.

### BRIEF DESCRIPTION OF THE DRAWINGS

Figs. 1 is a block diagram illustrating an absorption refrigerating apparatus according to an embodiment of the present invention in which both a circulation path of a refrigerant and a circulation path of an aqueous solution of a moisture absorbent are respectively formed as closed paths.
Fig. 2 is a perspective view illustrating an example in which an evaporation tube and an absorption tube are installed.
Figs. 3(a) and 3(b) each are a block diagram illustrating an absorption refrigerating apparatus according to an embodiment of the present invention in which either one of a circulation path of a refrigerant and a circulation path of an aqueous solution of a moisture absorbent is formed as a closed path.
Figs. 4(a) and 4(b) each are a block diagram illustrating an absorption refrigerating apparatus according to an embodiment of the present invention in which parts of a circulation path of a refrigerant and a circulation path of an aqueous solution of a moisture absorbent are respectively brought into opened states.
Fig. 5 is a block diagram illustrating an absorption refrigerating apparatus according to an embodiment of the present invention in which an evaporator, an absorber, a regenerator, and a condenser are respectively brought into opened states.
Fig. 6 is a block diagram illustrating a conventional absorption refrigerating apparatus.

### DESCRIPTION OF REFERENCE NUMERALS

1 Evaporator
10 Evaporation tube
11 Flow inlet
12 Flow outlet
13 Nozzle
15 Capillary tube assembly (evaporation promotional material)
16 Discharge port
2 Absorber
20 Absorption tube
21 Flow inlet
22 Flow outlet
23 Nozzle
24 Precooler
25 Cooler
26 Discharge port
3 Regenerator
30 Regeneration tube
31 Flow inlet
32 Flow outlet
33 Nozzle
35 Heater
36 Discharge port
4 Condenser
40 Condensation tube
41 Flow inlet
42 Flow outlet
43 Nozzle
44 Cooler
46 Discharge port
5 Cooling device
6 Demister
7 Bulkhead
8 Semi-permeable membrane
9 Heat exchanger
D Aqueous solution of a moisture absorbent
Dw Low-concentrated aqueous solution of a moisture absorbent
F Absorption refrigerating apparatus
P1 Pump
P2 Pump
P3 Pump
S Steam
U1 Evaporation and absorption unit
U2 Regeneration and condensation unit
V Mixing valve
W Water (refrigerant)

### BEST MODE FOR CARRYING OUT THE INVENTION

A best mode for carrying out the present invention will be described below based on embodiments illustrated.
In an absorption refrigerating apparatus F according to the present invention, an evaporator 1 evaporates water from a refrigerant such as water W to take heat of evaporation out of the refrigerant, to thus decrease the temperature of the refrigerant. The refrigerant is supplied to a cooling device 5 to provide the refrigerant for indoor cooling or the like.
Steam S produced at this time is absorbed in an aqueous solution of a moisture absorbent D in an absorber 2. The aqueous solution of the moisture absorbent D whose concentration is thus decreased is fed to a regenerator 3. The regenerator 3 dehydrates the aqueous solution of the moisture absorbent D. The dehydrated aqueous solution of the moisture absorbent D enters a state where its moisture absorption capability is high again, and is fed to the absorber 2 again and cyclically used.
A condenser 4 recovers the water removed from the aqueous solution of the moisture absorbent D by the regenerator 3. The water is fed to the evaporator 1 again and cyclically used.
The aqueous solution of the moisture absorbent D is a solution using lithium bromide, lithium chloride or the like as a moisture absorbent. In addition thereto, an appropriate moisture absorbent can also be used.
Examples of the refrigerant may include one using a moisture absorbent having a lower moisture absorption capability than that of the aqueous solution of the moisture absorbent D and one using a low-concentrated aqueous solution of a moisture absorbent Dw using the same moisture absorbent as that used by the aqueous solution of the moisture absorbent D, as described in the following embodiments, in addition to the water W.
The absorption refrigerating apparatus F according to the present invention will be described according to a plurality of embodiments that differ in form. However, the embodiments can also be changed, as needed, within the technical scope of the present invention.

### EMBODIMENTS

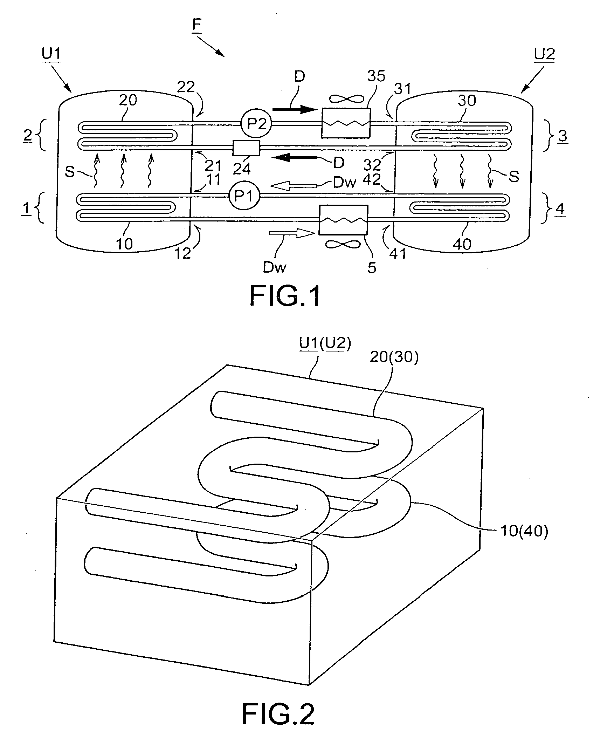

[An embodiment in which both a circulation path of a refrigerant and a circulation path of an aqueous solution of a moisture absorbent are formed as closed paths]
An embodiment in which both a circulation path of a refrigerant and a circulation path of an aqueous solution of a moisture absorbent D are respectively formed as closed paths will first be described. In Fig. 1, an absorption refrigerating apparatus F includes an evaporator 1 and an absorber 2 installed adjacent to the evaporator 1 and a regenerator 3 and a condenser 4 installed adjacent to the regenerator 3. The evaporator 1 and the absorber 2 are provided in an evaporation and absorption unit U1 serving as a housing having airtightness, and the regenerator 3 and the condenser 4 are provided in a regeneration and condensation unit U2 serving as a housing having airtightness.

The evaporator 1, the absorber 2, the regenerator 3, and the condenser 4 respectively have an evaporation tube 10, an absorption tube 20, a regeneration tube 30, and a condensation tube 40 provided in the evaporation and absorption unit U1 or the regeneration and condensation unit U2. Each of the evaporation tube 10, the absorption tube 20, the regeneration tube 30, and the condensation tube 40 is composed of a tube to which a semi-permeable membrane is applied.
The semi-permeable membrane is made of a hollow fiber separation membrane, ceramic or the like as a material. Only water molecules (water W, steam S) can penetrate through the semi-permeable membrane, while a moisture absorbent in the aqueous solution of the moisture absorbent D and a moisture absorbent in a low-concentrated aqueous solution of a moisture absorbent Dw cannot penetrate therethrough.

A closed path is formed by respectively connecting a flow inlet 11 of the evaporation tube 10 and a flow outlet 42 of the condensation tube 40 and connecting a flow outlet 12 of the evaporation tube 10 and a flow inlet 41 of the condensation tube 40, and the low-concentrated aqueous solution of the moisture absorbent Dw is sealed thereinto. Furthermore, a cooling device 5 is provided between the flow outlet 12 and the flow inlet 41, and a pump P1 is provided at an appropriate point.
The low-concentrated aqueous solution of the moisture absorbent Dw is set lower in the concentration of the moisture absorbent, i.e., the moisture absorption capability, than the aqueous solution of the moisture absorbent D sealed into a closed path including the absorption tube 20 and the regeneration tube 30, described below.

A closed path is formed by respectively connecting a flow inlet 21 of the absorption tube 20 and a flow outlet 32 of the regeneration tube 30 and connecting a flow outlet 22 of the absorption tube 20 and a flow inlet 31 of the regeneration tube 30, and the aqueous solution of the moisture absorbent D is sealed thereinto. Furthermore, a heater 35 is provided between the flow outlet 22 and the flow inlet 31, a precooler 24 is further provided between the flow outlet 32 and the flow inlet 21, and a pump P2 is provided at an appropriate point.

Even if a space between the evaporation tube 10 and the absorption tube 20 and a space between the regeneration tube 30 and the condensation tube 40 are slight, the steam S is smoothly moved. This enables space saving, allowing miniaturization of the whole of the evaporation and absorption unit U1, the regeneration and condensation unit U2, and thus the whole of the absorption refrigerating apparatus F.
Furthermore, when the evaporation tube 10 and the absorption tube 20 are faced to each other and brought closer to each other as illustrated in Fig. 2, the evaporation and absorption unit U1 and the absorption refrigerating apparatus F can be further miniaturized.

The absorption refrigerating apparatus F according to the embodiment illustrated in Fig. 1 is configured, as described above, as an example. The operating manner thereof will be described below.

### (1) Movement of water and heat within evaporation and absorption unit

First, the pumps P1 and P2 are started to respectively circulate the low-concentrated aqueous solution of the moisture absorbent Dw and the aqueous solution of the moisture absorbent D within the circulation paths while starting the precooler 24 and the heater 35. When the absorption refrigerating apparatus F is mounted on an automobile, exhaust heat of an engine is effectively utilized as a heat source of the heater 35.
The aqueous solution of the moisture absorbent D cooled by the precooler 24 is supplied to the absorption tube 20 with its moisture absorption capability enhanced. Therefore, water in the low-concentrated aqueous solution of the moisture absorbent Dw positioned in the evaporation tube 10 is forced to evaporate within the evaporation and absorption unit U1. Therefore, the water in the low-concentrated aqueous solution of the moisture absorbent Dw evaporates into steam S. The steam S penetrates through the evaporation tube 10 and further penetrates through the absorption tube 20 while being absorbed by the aqueous solution of the moisture absorbent D within the absorption tube 20. A case where the water W that has oozed out to a surface of the evaporation tube 10 evaporates here is also assumed.
At this time, the low-concentrated aqueous solution of the moisture absorbent Dw within the evaporation tube 10 decreases in temperature after heat of evaporation is taken out, and is fed to the cooling device 5 and provided as a refrigerant in this state.
In the above-mentioned process, the low-concentrated aqueous solution of the moisture absorbent Dw within the evaporation tube 10 increases in concentration, while the aqueous solution of the moisture absorbent D within the absorption tube 20 decreases in concentration.

### (2) Movement of water within regeneration and condensation unit

The aqueous solution of the moisture absorbent D discharged from the flow outlet 22 is supplied to the regeneration tube 30 after the temperature thereof is raised by the heater 35 so that the water in the aqueous solution of the moisture absorbent D evaporates into steam S within the regeneration tube 30. The steam S penetrates through the regeneration tube 30 and further penetrates through the condensation tube 40 while being absorbed by the low-concentrated aqueous solution of the moisture absorbent Dw positioned in the condensation tube 40. A case where the water W condensed on a surface of the condensation tube 40 is absorbed in the low-concentrated aqueous solution of the moisture absorbent Dw after penetrating through the condensation tube 40 is also assumed.
In such a process, the aqueous solution of the moisture absorbent D within the regeneration tube 30 increases in concentration, while the low-concentrated aqueous solution of the moisture absorbent Dw within the condensation tube 40 decreases in concentration.
The aqueous solution of the moisture absorbent D and the low-concentrated aqueous solution of the moisture absorbent Dw are respectively fed to the absorption tube 20 and the evaporation tube 10 again and cyclically used.

As described above, the absorption refrigerating apparatus F according to the embodiment of the present invention is unitized by providing two types of devices in one housing so that the whole apparatus can be miniaturized.
Water molecules (water W, steam S) can penetrate through the evaporation tube 10, the absorption tube 20, the regeneration tube 30, and the condensation tube 40 each composed of a semi-permeable membrane, while the moisture absorbents in the aqueous solution of the moisture absorbent D and the low-concentrated aqueous solution of the moisture absorbent Dw cannot penetrate therethrough. Even when the apparatus swings and is vibrated, the aqueous solution of the moisture absorbent D and the low-concentrated aqueous solution of the moisture absorbent Dw are not mixed with each other in practice.
Therefore, the absorption refrigerating apparatus F can be realized as an apparatus that can be mounted on a mover such as an automobile or the like.

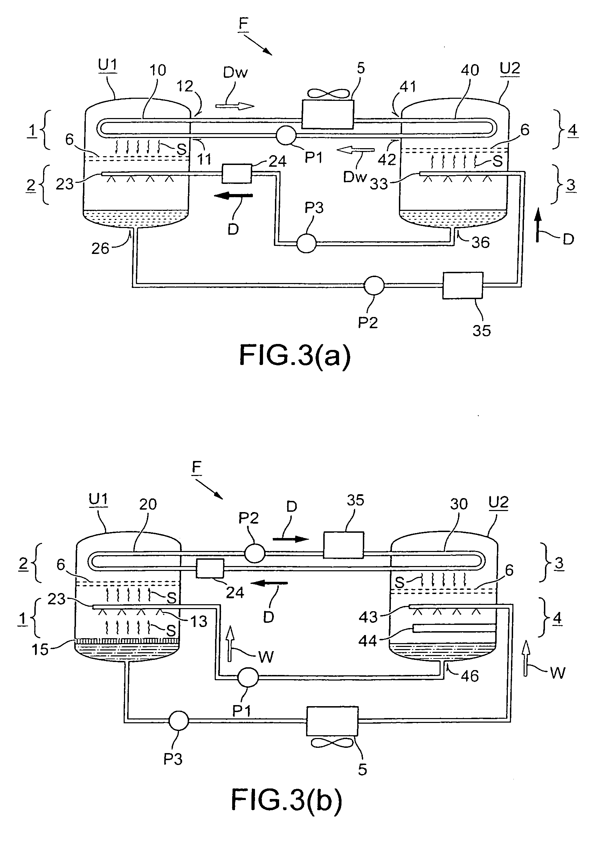

[An embodiment in which either one of a circulation path of a refrigerant and a circulation path of an aqueous solution of a moisture absorbent is formed as a closed path]
An embodiment in which either one of a circulation path of a refrigerant and a circulation path of an aqueous solution of a moisture absorbent D is formed as a closed path will now be described. First, an example in which an area between an evaporator 1 and a condenser 4 is formed as a closed path will be described, as illustrated in Fig. 3 (a).
The basic configuration and the operating principle of an absorption refrigerating apparatus F are the same as those illustrated in the embodiment already described and hence, only portions that differ in configuration from the above embodiment will be described herein.
In the absorption refrigerating apparatus F illustrated in Fig. 3 (a), an evaporation tube 10 and a condensation tube 40 are each composed of a tube to which a semi-permeable membrane is applied. A closed path is formed by respectively connecting a flow inlet 11 of the evaporation tube 10 and a flow outlet 42 of the condensation tube 40 and connecting a flow outlet 12 of the evaporation tube 10 and a flow inlet 41 of the condensation tube 40 through lines, and a low-concentrated aqueous solution of a moisture absorbent Dw serving as a refrigerant is sealed into the closed path.
A cooling device 5 is provided between the flow outlet 12 and the flow inlet 41, and a pump P1 is further provided at an appropriate point.
The evaporation tube 10 and the condensation tube 40 are respectively disposed in upper parts in housings of an evaporation and absorption unit U1 and a regeneration and condensation unit U2.

On the other hand, the circulation path of the aqueous solution of the moisture absorbent D is formed in an opened state, a nozzle 23 is disposed below a demister 6 provided in a housing of the evaporation and absorption unit U1, and the nozzle 23 and a discharge port 36 formed at the bottom of a housing of the regeneration and condensation unit U2 are connected to each other through an appropriate line. A cooler 25 and a pump P3 are provided in the line.
Furthermore, a nozzle 33 is disposed below a demister 6 provided in the housing of the regeneration and condensation unit U2, and the nozzle 33 and a discharge port 26 formed at the bottom of the housing of the evaporation and absorption unit U1 are connected to each other through an appropriate line. A pump P2 and a heater 35 are provided in the line.
The circulation path of the aqueous solution of the moisture absorbent D is thus formed, and an area between the nozzle 23 and the discharge port 26 and an area between the nozzle 33 and the discharge port 36 are respectively in opened states. The aqueous solution of the moisture absorbent D is sprayed from the nozzles 23 and 33 within the housings of the evaporation and absorption unit U1 and the regeneration and condensation unit U2, and is circulated while being temporarily stored in lower parts of the housings.

The absorption refrigerating apparatus F according to the present embodiment is configured, as described above, as an example. The operating manner thereof will be described below.

### (1) Movement of water and heat within evaporation and absorption unit

First, the pumps P1, P2, and P3 are started to respectively circulate the low-concentrated aqueous solution of the moisture absorbent Dw and the aqueous solution of the moisture absorbent D within the circulation paths while starting the precooler 24 and the heater 35.
The aqueous solution of the moisture absorbent D cooled by the precooler 24 is sprayed from the nozzle 23 with its moisture absorption capability enhanced. Therefore, water in the low-concentrated aqueous solution of the moisture absorbent Dw positioned in the evaporation tube 10 is forced to evaporate within the evaporation and absorption unit U1. Therefore, the water in the low-concentrated aqueous solution of the moisture absorbent Dw evaporates into steam S. The steam S penetrates through the evaporation tube 10 and further passes through the demister 6 while being absorbed by the aqueous solution of the moisture absorbent D.
At this time, the low-concentrated aqueous solution of the moisture absorbent Dw within the evaporation tube 10 decreases in temperature after heat of evaporation is taken out, and is fed to the cooling device 5 and provided as a refrigerant in this state.
In the above-mentioned process, the low-concentrated aqueous solution of the moisture absorbent Dw within the evaporation tube 10 increases in concentration, while the aqueous solution of the moisture absorbent D in a stored state within the evaporation and absorption unit U1 decreases in concentration.

### (2) Movement of water within regeneration and condensation unit

The aqueous solution of the moisture absorbent D discharged from the discharge port 26 is sprayed from the nozzle 33 after the temperature thereof is raised by the heater 35 so that the water in the aqueous solution of the moisture absorbent D evaporates into steam S. The steam S passes through the demister 6 and further penetrates through the condensation tube 40 while being absorbed by the low-concentrated aqueous solution of the moisture absorbent Dw positioned in the condensation tube 40.
In such a process, the aqueous solution of the moisture absorbent D in a stored state within the regeneration and condensation unit U2 increases in concentration, while the low-concentrated aqueous solution of the moisture absorbent Dw within the condensation tube 40 decreases in concentration.
The aqueous solution of the moisture absorbent D and the low-concentrated aqueous solution of the moisture absorbent Dw are respectively fed to the nozzle 23 and the evaporation tube 10 again and cyclically used.

As described above, in the absorption refrigerating apparatus F according to the embodiment of the present invention, the demisters 6 are respectively positioned above the nozzles 23 and 33. Therefore, the aqueous solution of the moisture absorbent D does not come into direct contact with the evaporation tube 10 and the condensation tube 40 within the respective housings of the evaporation and absorption unit U1 and the regeneration and condensation unit U2. This can prevent the penetration of water molecules (water W, steam S) through the semi-permeable membranes composing the evaporation tube 10 and the condensation tube 40 from being blocked.
Therefore, the absorption refrigerating apparatus F can be realized as an apparatus that can be mounted on a mover such as an automobile or the like.
Furthermore, the absorption refrigerating apparatus F is unitized by providing two types of devices in one housing. Therefore, the whole apparatus can be miniaturized.

Although in the configuration of the absorption refrigerating apparatus F illustrated in Fig. 3 (a), an area between the evaporator 1 and the condenser 4 is formed as a closed path, an area between an absorber 2 and a regenerator 3, as illustrated in Fig. 3 (b), is alternatively formed as a closed path by changing a point at which the device provided between the evaporation and absorption unit U1 and the regeneration and condensation unit U2 in the apparatus is installed while installing a cooler 44 within a condenser 4.
In this case, steam S that has penetrated through a regeneration tube 30 in the regenerator 3 is cooled by the cooler 44 and condensed to water W. Therefore, a moisture absorption function is not particularly required for a refrigerant. When the condenser 4 is brought into an opened state including a nozzle 43 and the cooler 44, water W can be used as the refrigerant.
Furthermore, a capillary tube assembly 15 composed of a fiber material capable of producing a capillary phenomenon may be installed on a surface of the water W in a stored state within the evaporator 1 to promote the evaporation of the water W.

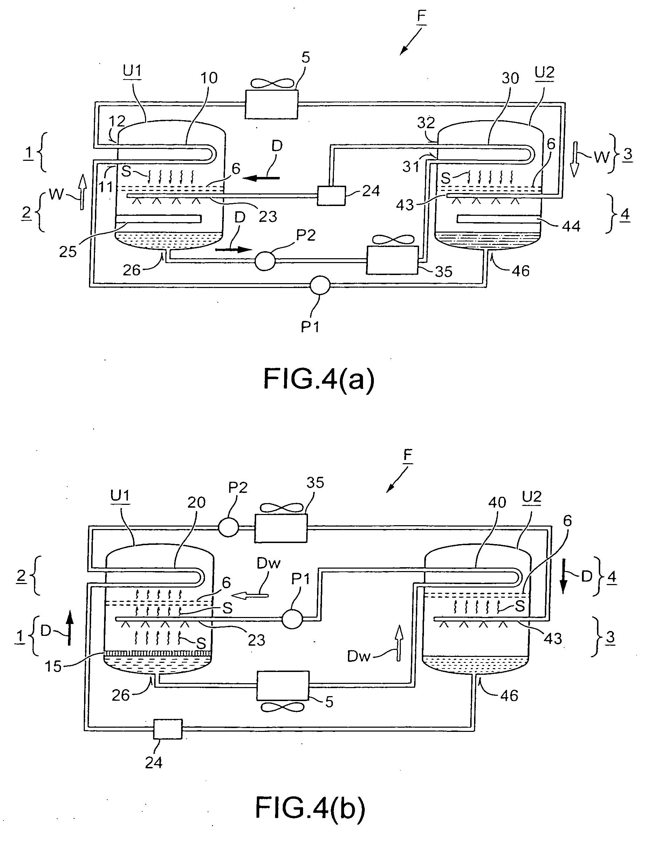

[An embodiment in which parts of a circulation path of a refrigerant and a circulation path of an aqueous solution of a moisture absorbent are brought into opened states]
An embodiment in which parts of a circulation path of a refrigerant and a circulation path of an aqueous solution of a moisture absorbent D are respectively brought into opened states will be described. First, an example in which an absorber 2 and a condenser 4 are respectively brought into opened states, as illustrated in Fig. 4 (a), will be described.
The basic configuration and the operating principle of an absorption refrigerating apparatus F are the same as those illustrated in the embodiments already described and hence, only portions that differ in configuration from the above embodiments will be described herein.
In the absorption refrigerating apparatus F illustrated in Fig. 4 (a), an evaporation tube 10 and a regeneration tube 30 are each composed of a tube to which a semi-permeable membrane is applied, and a circulation path of water W serving as a refrigerant is formed by connecting a flow inlet 11 of the evaporation tube 10 and a discharge port 46 and connecting a flow outlet 12 of the evaporation tube 10 and a nozzle 43.
Furthermore, a cooling device 5 is provided between the flow outlet 12 and the nozzle 43, and a pump P1 is further provided at an appropriate point.
Each of respective housings of an evaporation and absorption unit U1 and a regeneration and condensation unit U2 is partitioned into upper and lower spaces by a demister 6.
The evaporation tube 10 is disposed in the upper space of the evaporation and absorption unit U1, and the nozzle 43 is disposed in the lower space of the regeneration and condensation unit U2.

On the other hand, the circulation path of the aqueous solution of the moisture absorbent D is formed by connecting a nozzle 23 disposed in the lower space of the evaporation and absorption unit U1 and a flow outlet 32 of the regeneration tube 30 disposed in the upper space of the regeneration and condensation unit U2 through a line and connecting a discharge port 26 and a flow inlet 31 of the regeneration tube 30 through a line.
A precooler 24 is provided between the nozzle 23 and the flow outlet 32, and a pump P2 and a heater 35 are provided between the discharge port 26 and the flow inlet 31.
Furthermore, a cooler 25 is provided below the nozzle 23, and a cooler 44 is provided below the nozzle 43.

As described above, in the absorption refrigerating apparatus F according to the present embodiment, the absorber 2 in the circulation path of the aqueous solution of the moisture absorbent D enters an opened state between the nozzle 23 and the discharge port 26, and the condenser 4 in the circulation path of the water W serving as the refrigerant enters an opened state between the nozzle 43 and the discharge port 46.

The absorption refrigerating apparatus F according to the present embodiment is configured, as described above, as an example. The operating manner thereof will be described below.

### (1) Movement of water and heater within evaporation and absorption unit

First, the pumps P1 and P2 are started to respectively circulate the water W and the aqueous solution of the moisture absorbent D within the respective circular paths while starting the precooler 24, the cooler 25, the heater 35, and the cooler 44.
The aqueous solution of the moisture absorbent D cooled by the precooler 24 is sprayed from the nozzle 23 with its moisture absorption capability enhanced, and is further cooled by the cooler 25 so that the moisture absorption capability is enhanced. In the evaporation and absorption unit U1, the water W positioned in the evaporation tube 10 is forced to evaporate. Thus, a part of the water W evaporates into steam S. The steam S penetrates through the evaporation tube 10 and further passes through the demister 6 while being absorbed by the aqueous solution of the moisture absorbent D.
At this time, the water W within the evaporation tube 10 decreases in temperature after heat of evaporation is taken out, and is fed to the cooling device 5 and provided as a refrigerant in this state.
In the above-mentioned process, the aqueous solution of the moisture absorbent D in a stored state within the evaporation and absorption unit U1 decreases in concentration.

### (2) Movement of water in regeneration and condensation unit

The aqueous solution of the moisture absorbent D discharged from the discharge port 26 is supplied to the regeneration tube 30 after the temperature thereof is raised by the heater 35. Here, water in the aqueous solution of the moisture absorbent D evaporates into steam S. The steam S penetrates through the regeneration tube 30. The steam S that has further passed through the demister 6 comes into contact with the water W sprayed from the nozzle 43, and is further cooled by the cooler 44 and condensed.
In such a process, the aqueous solution of the moisture absorbent D in the regeneration tube 30 increases in concentration.
The aqueous solution of the moisture absorbent D and the water W are respectively fed to the nozzle 23 and the evaporation tube 10 again and cyclically used.

As described above, in the absorption refrigerating apparatus F according to the embodiment of the present invention, the demisters 6 are respectively positioned above the nozzles 23 and 43. Therefore, the aqueous solution of the moisture absorbent D does not come into direct contact with the evaporation tube 10 within the housing of the evaporation and absorption unit U1, and the water W does not come into direct contact with the regeneration tube 30 within the housing of the regeneration and condensation unit U2. This can prevent the penetration of the steam S through the semi-permeable membrane from being blocked by wetting of respective surfaces of the evaporation tube 10 and the regeneration tube 30.
Therefore, the absorption refrigerating apparatus F can be realized as an apparatus that can be mounted on a mover such as an automobile or the like.
Furthermore, the absorption refrigerating apparatus F is unitized by providing two types of devices in one housing, so that the whole apparatus can be miniaturized.

Although in the above-mentioned embodiment, the absorber 2 and the condenser 4 are respectively brought into opened states, an evaporator 1 and a regenerator 3 can also be respectively brought into opened states, as illustrated in Fig. 4 (b).
In this case, steam S produced in the regenerator 3 is accepted in a refrigerant by penetrating through a condensation tube 40. Therefore, a low-concentrated aqueous solution of a moisture absorbent Dw is used as the refrigerant.
A capillary tube assembly 15 composed of a fiber material capable of producing a capillary phenomenon may be installed on a surface of the low-concentrated aqueous solution of the moisture absorbent Dw within the evaporator 1, to promote the evaporation of water.

[An embodiment in which an evaporator, an absorber, a regenerator, and a condenser are brought into opened states]
An embodiment in which an evaporator 1, an absorber 2, a regenerator 3, and a condenser 4 are respectively brought into opened states will be now described.
The basic configuration and the operating principle of an absorption refrigerating apparatus F are the same as those illustrated in the embodiments already described and hence, only portions that differ in configuration from the above embodiments will be described.
The absorption refrigerating apparatus F illustrated in Fig. 5 is configured by partitioning each of respective housings of an evaporation and absorption unit U1 and a regeneration and condensation unit U2 into two spaces by a bulkhead 7 and a filmy semi-permeable membrane 8 while disposing respective members composing the evaporator 1, the absorber 2, the regenerator 3, and the condenser 4 in the spaces.
First, in the evaporation and absorption unit U1, a nozzle 13 is disposed in the left space in Fig. 5 to form the evaporator 1, while the nozzle 23 and the cooler 25 are disposed in the right space to form the absorber 2.
Furthermore, in the regeneration and condensation unit U2, a nozzle 33 is disposed in the left space in Fig. 5 to form the regenerator 3, while a cooler 44 is disposed in the right space to form the condenser 4.

A circulation path of water W is formed by connecting the nozzle 13 and a discharge port 46 through a line with a mixing valve V interposed therebetween. In the present embodiment, a discharge port 16 and the mixing valve V are connected to each other, and a pump P1 and a cooling device 5 are provided halfway therebetween.
A circulation path of an aqueous solution of a moisture absorbent D is formed by connecting a discharge port 26 and the nozzle 33 to each other through a line with a heat exchanger 9 interposed therebetween and connecting a discharge port 36 and the nozzle 23 to each other through a line with the heat exchanger 9 interposed therebetween. A precooler 24 is provided between the heat exchanger 9 and the nozzle 23, and a heater 35 is provided between the heat exchanger 9 and the nozzle 33.
Furthermore, a pump P2 is provided between the discharge port 26 and the heat exchanger 9, and a pump P3 is provided between the discharge port 36 and the heat exchanger 9.

As described above, in the absorption refrigerating apparatus F according to the present embodiment, the evaporator 1 in the circulation path of the water W serving as the refrigerant enters an opened state between the nozzle 13 and the discharge port 16, and the condenser 4 is further formed in an opened state.
Furthermore, the absorber 2 in the circulation path of the aqueous solution of the moisture absorbent D enters an opened state between the nozzle 23 and the discharge port 26, and the regenerator 3 enters an opened state between the nozzle 33 and the discharge port 36.

The absorption refrigerating apparatus F according to the present embodiment is configured, as described above, as an example. The operating manner thereof will be described below.

### (1) Movement of water and heat within evaporation and absorption unit

First, the pumps P1, P2, and P3 are started to circulate the water W and the aqueous solution of the moisture absorbent D within the respective circulation paths while starting the precooler 24, the cooler 25, the heater 35, and the cooler 44.
The aqueous solution of the moisture absorbent D cooled by the precooler 24 is sprayed from the nozzle 23 with its moisture absorption capability enhanced, and is further cooled by the cooler 25 so that the moisture absorption capability is enhanced. In the evaporator 1, the water W sprayed from the nozzle 13 is forced to evaporate. Thus, a part of the water W evaporates into steam S. The steam S penetrates through the semi-permeable membrane 8 while being absorbed by the aqueous solution of the moisture absorbent D within the absorber 2.
At this time, the water W within the evaporation 1 decreases in temperature after heat of evaporation is taken out, and is fed to the cooling device 5 and provided as a refrigerant in this state.
In the above-mentioned process, the aqueous solution of the moisture absorbent D in a stored state within the absorber 2 decreases in concentration.

### (2) Movement of water within regeneration and condensation unit

The aqueous solution of the moisture absorbent D discharged from the discharge port 26 passes through the heat exchanger 9, is supplied to the nozzle 33 after the temperature thereof is raised by the heater 35, and is sprayed into the regenerator 3, where a part of the water evaporates into steam S. In such a process, the aqueous solution of the moisture absorbent D in a stored state within the regenerator 3 increases in concentration.
When the aqueous solution of the moisture absorbent D passes through the heat exchanger 9, it is fed to the nozzle 23 again via the precooler 24 and cyclically used after heat exchange with the aqueous solution of the moisture absorbent D fed from the discharge port 26 to the nozzle 33.
On the other hand, the steam S produced in the regenerator 3 enters the condenser 4 after penetrating through the semi-permeable membrane 8. In the condenser 4, the steam S is cooled by the cooler 44 and condensed into water W.
The water W is fed to the mixing valve V from the discharge port 46, to merge into the water W fed from the cooling device 5 in the mixing valve V, and is then fed to the nozzle 13 again and cyclically used.

Demisters 6 may be respectively provided above the nozzles 13, 23, and 33. In this case, the aqueous solution of the moisture absorbent D and the water W do not come into direct contact with the semi-permeable membrane 8. This prevents the penetration of the steam S through the semi-permeable membrane 8 from being blocked.

As described above, in the absorption refrigerating apparatus F according to the embodiment of the present invention, the semi-permeable membrane 8 allows the penetration of the steam S, while not allowing the penetration of the aqueous solution of the moisture absorbent D or the low-concentrated aqueous solution of the moisture absorbent Dw. Even when the apparatus swings or is vibrated, the aqueous solution of the moisture absorbent D and the low-concentrated aqueous solution of the moisture absorbent Dw are not mixed with each other.
Therefore, the absorption refrigerating apparatus F can be realized as an apparatus that can be mounted on a mover such as an automobile or the like.
Furthermore, the absorption refrigerating apparatus F is unitized by providing two types of devices in one housing, so that the whole apparatus can be miniaturized.

## Claims

1. An absorption refrigerating apparatus comprising an evaporation and absorption unit including an evaporator and an absorber installed adjacent to the evaporator, and a regeneration and condensation unit including a regenerator and a condenser installed adjacent to the regenerator, wherein the evaporator evaporates water in a refrigerant to take heat of evaporation out of the refrigerant, to decrease the temperature of the refrigerant and provide the refrigerant for cooling, steam produced at this time is absorbed in an aqueous solution of a moisture absorbent in the absorber to promote the evaporation of the water from the refrigerant, the regenerator removes the water absorbed in the aqueous solution of the moisture absorbent and feeds the aqueous solution of the moisture absorbent to the absorber again to cyclically use the aqueous solution of the moisture absorbent, and the condenser recovers the water removed from the aqueous solution of the moisture absorbent and feeds the water to the evaporator again to cyclically use the water, **characterized in that** a semi-permeable membrane is interposed between the refrigerant positioned in the evaporator and the aqueous solution of the moisture absorbent positioned in the absorber and/or between the aqueous solution of the moisture absorbent positioned in the regenerator and the refrigerant positioned in the condenser.

2. The absorption refrigerating apparatus according to claim 1, **characterized in that** the evaporator and the absorber are provided in the same housing.

3. The absorption refrigerating apparatus according to claim 1 or 2, **characterized in that** the regenerator and the condenser are provided in the same housing.

4. The absorption refrigerating apparatus according to claim 1, 2, or 3, **characterized in that** a demister is interposed between the evaporator and the absorber or between the regenerator and the condenser.

5. The absorption refrigerating apparatus according to claim 1, 2, 3, or 4, **characterized in that** the semi-permeable membrane is tubular, and is filled with the refrigerant or the aqueous solution of the moisture absorbent.

6. The absorption refrigerating apparatus according to claim 1, 2, 3, or 4, **characterized in that** the semi-permeable membrane is a membrane provided to separate the evaporator and the absorber or the regenerator and the condenser.

7. The absorption refrigerating apparatus according to claim 1, 2, 3, 4, or 6, **characterized in that** a capillary tube assembly is provided on a surface of the refrigerant in the evaporator.

8. The absorption refrigerating apparatus according to claim 1, 2, 3, 4, 5, 6, or 7, **characterized in that** the refrigerant is an aqueous solution of a moisture absorbent that is weaker in moisture absorption power than the aqueous solutions of the moisture absorbents positioned in the absorber and the regenerator.
